# EUROPEAN PATENT APPLICATION

(11) **EP 2 679 643 A1**
(43) Date of publication of application: **01.01.2014**
(21) Application number: 12749736.0
(22) Date of filing: 27.02.2012
(51) Int. Cl.: C09D 133/00, C09D 5/00, C09D 5/24, C09D 7/12, C09D 165/00, C09D 175/04, G02B 1/10

(54) **COATING COMPOSITION, PLASTIC LENS**

(30) Priority: 25.02.2011 JP 2011039844
(71) Applicant: HOYA Corporation, Tokyo 161-8525 (JP)
(72) Inventor: WATANABE Makoto, Tokyo 161-8525 (JP); SATO Daisuke, Tokyo 161-8525 (JP)
(74) Representative: Betten & Resch
(86) International application number: PCT/JP2012/054833
(87) International publication number: WO 2012/115271

(57) **Abstract**

There is provided a coating composition capable of realizing a coating layer having conductivity and sufficient transparency. The coating composition contains respective components of a component (a) and a component (b) below, Component (a) : acrylic resin or urethane resin, Component (b) : conductive polymer.

## Description

### Technical Field

The present invention relates to a coating composition for an antistatic coating. Furthermore, it relates to a plastic lens in which a primer coat layer is formed on a base material with the coating composition.

### Background Art

In optical components such as lenses, as a material for the base material thereof, usually, an insulating material such as glass or plastic is used.

Since these materials for the base material are insulating materials, the surface may become charged.
In particular, when the surface of optical components is wiped with another insulating material such as cloth or resinous sponge, the surface is more likely to become charged. In a state where the base material is charged, dust or the like tends to adhere to the surface.

In order to suppress or prevent charging, it is effective to form a coating layer containing a conductive material for the insulating material of the base material.

As one example, there is proposed the suppression of charging by introducing an ITO film into an antireflection film to be formed on the base material, to thereby give a prescribed surface resistance (for example, see Patent Literature 1).

Moreover, as another example, in Patent Literature 2, there is proposed the realization of a coating layer having antistatic properties and abrasion resistance, through the use of a coating composition containing a conductive polymer such as polythiophene, a colloidal particle, and epoxy silane serving as a binder for a hard coat layer.

### Citation List

### Patent Literature

PTL 1: US 6852406 A
PTL 2: JP 2010-528123 W

### Summary of Invention

### Technical Problem

In the method described in Patent Literature 1, the ITO film to be introduced into the antireflection film is formed by vacuum evaporation.
However, since the ITO film is formed by evaporation, the manufacturing cost becomes high.
In addition, there is a problem in which, since the ITO film is introduced into the antireflection film, the method cannot be applied to optical components being not provided with an antireflection film.

In the method described in Patent Literature 2, a conductive polymer such as polythiophene is contained in a hard coat layer, and thus it is possible to impart conductivity to the hard coat layer having abrasion resistance.
However, the hard coat layer is required to be formed in a thickness equal to or larger than certain level for obtaining abrasion resistance, and thus, in order to obtain sufficient conductivity, it is necessary to increase the addition amount of the conductive polymer larger depending on the thickness of the hard coat layer. In addition, when the addition amount of the conductive polymer to the hard coat layer is increased, there are generated problems of causing, in a coated film, foreign substances derived from the conductive polymer, deteriorating transparency, and the like.

In order to solve the above-mentioned problems, in the present invention, there is provided a coating composition capable of realizing a coating layer having conductivity and transparency.
Furthermore, there is provided a plastic lens having a coating layer formed including the coating composition and having antistatic properties and abrasion-resistant.

### Solution to Problem

The coating composition of the present invention contains each of a component (a) and a component (b) below.
Component (a): Acrylic resin or urethane resin
Component (b): Conductive polymer

In the coating composition of the present invention, a configuration in which the conductive polymer of the component (b) is polythiophene can be adopted.
In the coating composition of the present invention, a configuration in which the content (% by mass) of the component (b) in the coating composition is 0.5% to 60% can be adopted.

The plastic lens of the present invention has a base material composed of plastic, a primer coat layer that is formed on the base material and is composed of a coating composition containing each of the component (a) and the component (b) below, and a hard coat layer formed on the primer coat layer.
Component (a): Acrylic resin or urethane resin
Component (b): Conductive polymer

In the coating composition of the present invention and in the plastic lens of the present invention, a configuration, in which the coating composition further contains a fine particle of oxide of at least one kind of element selected from silicon, aluminum, tin, zirconium and titanium as a component (c), can be adopted.

According to the coating composition of the present invention described above, since acrylic resin or urethane resin and a conductive polymer are contained, it becomes possible to form a coating layer having conductivity and transparency, easily at low manufacturing cost, by a method such as dipping or coating, without using a method such as evaporation or sputtering.
According to the plastic lens of the present invention, since a primer coat layer composed of the coating composition of the present invention is formed on a base material, it is possible to mprt conductivity by the primer coat layer. Furthermore, it becomes possible to protect the primer coat layer by the hard coat layer on the primer coat layer.

### Advantageous Effects of Invention

By using the coating composition of the present invention, a coating layer having conductivity and transparency can be formed easily at low manufacturing cost, by dipping or the like.
Consequently, mass production of optical components such as a plastic lens including a coating layer having conductivity and transparency is possible.

According to the plastic lens of the present invention, antistatic properties can be realized by imparting conductivity to the primer coat layer of a lower layer. Furthermore, it is possible for the hard coat layer on the primer coat layer to protect the primer coat layer and to impart abrasion resistance to the primer coat layer.
Furthermore, even when transparency deteriorates when a conductive polymer is added to a primer coat layer of a single layer, by providing separately the hard coat layer on the primer coat layer having conductivity, the reduction of outer scattering improves transparency.
Accordingly, by the plastic lens of the present invention, a plastic lens having antistatic properties and abrasion resistance can be realized.
Moreover, since a conductive polymer is added to the primer coat layer below the hard coat layer, even when the content of the conductive polymer is comparatively small, it becomes possible to impart sufficient conductivity, and transparency can be improved by reducing the content of the conductive polymer.

Furthermore, when there is adopted the configuration in which the primer coat layer is composed of a coating composition containing oxide as the component (c), it is possible to adjust the refractive index of the primer coat layer by the oxide and to bring the refractive index of the primer coat layer, close to the refractive index of the base material and the hard coat layer, to thereby reduce an interference pattern. In addition, by the selection of material of the oxide of component (c), it becomes possible to deal with a refractive index of 1.5 to 1.7.
The combination of the component (c) and the conductive polymer of component (b) makes it possible to deal with various base materials.

### Description of Embodiments

Hereinafter, the best mode for carrying out the invention will be described.
First, the outline of the present invention will be described.

The coating composition of the present invention contains each of a component (a) and a component (b) below.
Component (a): Acrylic resin or urethane resin
Component (b): Conductive polymer

As the component (a), an acrylic resin or urethane resin to be used in a coating agent for a primer coat layer is used.

As the conductive polymer of the component (b), publicly known various conductive polymers can be used.
Examples thereof include conductive polymers such as polythiophene, polypyrrole, polyaniline, polyethylene imine, Porisenofen and polyallylamine.
In particular, polythiophene is favorable.

The content (% by mass) of the conductive polymer of the component (b) in the coating composition is preferably in the range of 0.5% to 60%, more preferably in the range of 0.5% to 50%.
When the content is less than 0.5%, sufficient conductivity cannot be obtained in a coating layer to be formed.
When the content is more than 60%, the transparency of a coating layer to be formed cannot be maintained.

The plastic lens of the present invention has a base material composed of plastic, a primer coat layer that is formed on the base material and is composed of a coating composition containing each of the component (a) and the component (b) below, and the hard coat layer formed on the primer coat layer.
Component (a): Acrylic resin or urethane resin
Component (b): Conductive polymer

Examples of the plastics of the base material constituting the plastic lens of the present invention include copolymers of methylmethacrylate and one or more kinds of other monomers, copolymers of diethylene glycol bisallylcarbonate and one or more kinds of other monomers, polycarbonate, polystyrene, polyvinyl chloride, unsaturated polyester, polyethylene terephthalate, polyurethane, polythiourethane, sulfide resin utilizing ene-thiol reaction, vinyl polymers containing sulfur and the like, but these are not limiting.

The primer coat layer constituting the plastic lens of the present invention is composed of a coating composition containing the component (a) and the component (b), that is, the above-mentioned coating composition of the present invention. Accordingly, the primer coat layer may be formed by coating, on the base material, the coating composition of the present invention.

A material of the hard coat layer to be formed on the primer coat layer is not particularly restricted, and a publicly known coating composition composed of an organosilicon compound and a metal oxide colloidal particle can be used.

In the plastic lens of the present invention, an antireflection film may be formed on the hard coat layer.
Furthermore, on the surface, a water-repellent layer, a protective layer or the like may be formed.
Moreover, also on the side of the base material opposite to the primer coat layer, a hard coat layer may be formed.

The material of the antireflection film is not particularly restricted, but a single layer film or a multilayer film composed of a publicly known inorganic oxide or organic material can be used.

In the coating composition of the present invention and in the plastic lens of the present invention, a configuration may also be such that the coating composition further contains, as the (c) component, a fine particle of oxide of at least one element selected from silicon, aluminum, tin, zirconium and titanium.
As the oxide of the component (c), silicon oxide (SiO₂), aluminum oxide, tin oxide, zirconium oxide or titanium oxide can be used. Furthermore, it is also possible to use an oxide of two or more elements, the oxide containing at least one element selected from silicon, aluminum, tin, zirconium and titanium (for example, a mixture of oxides of each element, a complex oxide containing two elements).

The plastic lens of the present invention can be manufactured, for example, in the manner as described below.
First, a coating composition containing the component (a) and the component (b) is prepared. At this time, as necessary, the component (c) or another component is contained in the coating composition.
Then, a coating liquid containing the coating composition is coated on the upper surface of the base material by, for example, spin coating, which is further hardened, and thus the primer coat layer is formed.
Next, a coating liquid for the hard coat layer is prepared. Then, the coating liquid is coated on the primer coat layer by, for example, spin coating, which is further hardened, and thus the hard coat layer is formed. In particular, when the hard coat layer is to be coated on both surfaces of the base material, a dipping method is favorable.

Furthermore, in the case of forming an antireflection film, the antireflection film is formed on the hard coat layer.
When an inorganic material is used as the antireflection film, the antireflection film is formed by an evaporation method or the like.
When an organic material is used as the antireflection film, a coating liquid for an antireflection film is coated, which is hardened for forming the antireflection film.

Since the coating composition of the present invention contains the aforementioned component (a) and component (b), a coating layer having conductivity can be easily formed by dipping or the like.
Consequently, mass production of optical components such as a plastic lens containing a coating layer having conductivity and transparency is possible.

In the plastic lens of the present invention, the primer coat layer composed of the coating composition containing the above-mentioned component (a) and component (b) is formed on plastic of the base material, and furthermore, the hard coat layer is formed on the primer coat layer. Therefore, it is possible to impart conductivity to the primer coat layer of the lower layer and to protect the primer coat layer by the hard coat layer.
Furthermore, even if transparency deteriorates when a conductive polymer is added to a primer coat layer of a single layer, the reduction of outer scattering make it possible to improve transparency, by providing separately the hard coat layer on the primer coat layer having conductivity.
Accordingly, by the plastic lens of the present invention, a plastic lens having antistatic properties and abrasion resistance can be realized.

In addition, in the plastic lens of the present invention, a conductive polymer is added to the primer coat layer below the hard coat layer. Therefore, since the primer coat layer is formed thinner than the hard coat layer, even if the content of the conductive polymer is comparatively small, it becomes possible to impart sufficient conductivity.
Consequently, as compared with the case where a conductive polymer is added to the hard coat layer (such as Patent Literature 2 above), the reduction of the content of the conductive polymer makes it possible to enhance the transparency of the layer containing the conductive polymer.

Moreover, when there is adopted the configuration in which the primer coat layer is composed of the coating composition containing an oxide as the component (c), it is possible to adjust the refractive index of the primer coat layer with the oxide and to bring the refractive index of the primer coat layer, close to the refractive index of the base material or the hard coat layer, to thereby reduce an interference pattern. In addition, by the selection of material of the oxide of the component (c), it becomes possible to deal with the refractive index of 1.5 to 1.7.
By the combination of the component (c) and the conductive polymer of the component (b), it becomes possible to deal with various base materials.
Meanwhile, in the case where the adjustment of the refractive index is unnecessary, the coating composition may not contain the component (c).

Furthermore, in the plastic lens of the present invention, on the hard coat layer, an antireflection layer or a water-repellent layer can be formed.
In addition, depending on the kind of a layer to be formed in an upper layer of the hard coat layer, various functions may be imparted.

### [Examples]

Hereinafter, the present invention will be described more specifically using Examples, but the present invention is not limited to these Examples.

### (Example 1)

To a solvent composed of 30 parts by mass of pure water and 128 parts by mass of methanol, 13 parts by mass of SEPLEGYDA AS-D06 (particle diameter: about 70 nm) manufactured by Shin-Etsu Polymer Co., Ltd. was added, which was stirred for 30 min at room temperature.
Next, to the mixture, 11 parts by mass of water-dispersed polyurethane HUX-232 manufactured by ADEKA was added, which was stirred for 10 min.
After that, to the mixture, 500 ppm of surfactant Y-7006 manufactured by Dow Corning Toray Co., Ltd. was added, which was further stirred continuously for 48 hours, and thus a primer liquid A was prepared.

Next, a polycarbonate lens manufactured by HOYA was washed with water, which was then immersed into the primer liquid A under room temperature and was pulled up at a pull up rate of 250 mm/min.
After that, thermal hardening was performed for 20 min at 100°C.
Next, after air cooling, a dipping treatment was performed with a hard coat agent manufactured by HOYA (a silica sol dispersion liquid). Then, after performing thermal hardening at 80°C for 20 min, thermal hardening was further performed at 120°C for 2 hours to give a sample A.

### (Example 2)

A primer liquid B was prepared in the same method as in Example 1, except for adding 8 parts by mass of the water-dispersed polyurethane HUX-232 manufactured by ADEKA in Example 1, stirring for 10 min, and after that, adding newly 2 parts by mass of SUNCOLLOIDAL HX-405MH manufactured by Nissan Chemical Industries, Ltd. and stirring for 30 min.
Next, in the same manner as in Example 1, with a polycarbonate lens, the primer liquid B and the hard coat agent were coated sequentially, and after that, thermal hardening was performed to give a sample B.

### (Example 3)

A primer liquid C was prepared in the same method as in Example 2, except for using a solvent composed of 42 parts by mass of pure water and 115 parts by mass of methanol, using 14 parts by mass of EL coat TA2560 A-Pack (particle diameter: about 10 nm) manufactured by DaeHa ManTech in place of AS-D06 in Example 2, and adding 13 parts by mass of an acrylic acid dispersion liquid EL coat TA2560 B-Pack manufactured by the same company in place of HUX-232.
Next, in the same manner as in Example 2, with a polycarbonate lens, the primer liquid C and the hard coat agent were coated sequentially, and after that, thermal hardening was performed to give a sample C.

### (Example 4)

A primer liquid D was prepared in the same method as in Example 3, except for using a solvent composed of 75 parts by mass of pure water and 120 parts by mass of methanol, changing the addition amount of the EL coat TA2560 A-Pack manufactured by DaeHa ManTech in Example 3 to 105 parts by mass and the addition amount of the TA2560 B-Pack to 2.5 parts by mass, and further changing the addition amount of the HX-405MH to 0.4 parts by mass.
Next, in the same manner as in Example 3, with a polycarbonate lens, the primer liquid D and the hard coat agent were coated sequentially, and after that, thermal hardening was performed to give a sample D.

### (Example 5)

A primer liquid E was prepared in the same method as in Example 4, except for changing the addition amount of the EL coat TA2560 B-Pack manufactured by DaeHa ManTech in Example 4 to 1.5 parts by mass, and further, changing the addition amount of HX-405MH to 0.2 parts by mass.
Next, in the same manner as in Example 4, to a polycarbonate lens, the primer liquid E and the hard coat agent were coated sequentially and, after that, thermal hardening was performed to give a sample E.

### (Comparative Example 1)

A sample F was produced in the same procedure as in Example 1, except for using 6 parts by mass of SEPLEGYDA PE-S03 manufactured by Shin-Etsu Polymer Co., Ltd. in place of AS-D06 in Example 1.

### (Comparative Example 2)

To 100 parts by mass of the hard coat agent manufactured by HOYA (silica sol dispersion liquid), 15 parts by mass of SEPLEGYDA AS-D06 manufactured by Shin-Etsu Polymer Co., Ltd. were added, which was stirred for 24 hours at room temperature to give a hard coat agent A.
A polycarbonate lens manufactured by HOYA was washed with water, which was then immersed into a primer liquid manufactured by HOYA and pulled up at a pull up rate of 250 mm/min, and after that, thermal hardening was performed at 100°C for 20 min.
Next, after performing air cooling, a dipping treatment was performed with the hard coat agent A, thermal hardening was performed for 20 min at 80°C, and than thermal hardening was further performed for 2 hours at 120°C to give a sample G.

### (Comparative Example 3)

A sample H was produced by repeating the procedure in Comparative Example 2, except for changing the addition amount of AS-D06 to 4 parts by mass.

### (Comparative Example 4)

A sample I was produced in the same procedure as in Example 3, except for changing the addition amount of the EL coat TA2560 A-Pack in Example 3 to 3 parts by mass.

### (Comparative Example 5)

A sample J was produced in the same procedure as in Example 4, except for changing the addition amount of the EL coat TA2560 B-Pack in Example 4 to 0. 7 parts by mass and the addition amount of the HX-405MH to 0.1 part by mass.

### (Evaluation methods)

In respective examples in Examples and Comparative Examples, properties of coating agents and plastic lenses of samples were evaluated.

### (Compatibility with coating agent)

First, in respective examples in Examples and Comparative Examples, when producing samples, compatibility between the conductive polymer and the coating agent was examined.

### <Measurements of physical properties>

In addition, for respective samples of plastic lenses in Examples and Comparative Examples, various physical properties were measured by test methods described below.

### (1) External appearance during film forming

For respective samples, visual determination of external appearance was performed under a fluorescent light in a dark room.

### (2) Surface resistance

Surface resistance was measured with an insulation resistance tester (Hiresta UP MCP-HT450, manufactured by Mitsubishi Chemical Corporation).

### (3) Abrasion resistance test

The surface of plastic lenses were rubbed with steel wool (standard #0000, manufactured by NIPPON STEEL WOOL CO., LTD.) with 1 kgf/cm², and abrasion resistance was visually determined. Determination standard was as follows.
Double circles: almost no abrasion is caused even when rubbed strongly
Circles: faint abrasion is caused when rubbed strongly
Crosses: abrasion comparable as that in a plastic substrate is caused

### (4) Adhesiveness test (crosshatch test)

100-cross-cutting was performed at 1 mm intervals, an adhesive tape (Cellotape (registered trade mark), manufactured by Nichiban Co., Ltd.) was attached strongly and peeled away quickly, and the presence or absence of peeling of the hardened film was examined. Determination standard was as follows.
Double circles: no peeling exists
Circles: peeling exists in less than 10 crosscuts among 100 crosscuts
Crosses: peeling exists in not less than 10 crosscuts among 100 crosscuts

The ratio (% by mass) of solid content of the conductive polymer in solid content of the coating agent and results of respective evaluations are shown collectively in Table 1.

**[Table 1]**

| | RATIO OF SOLID CONTENT to CONDUCTIVE POLYMER(%) | EVALUATION RESULTS | | | | |
|---|---|---|---|---|---|---|
| | | COMPATIBILITY WITH COATING AGENT | EXTERNAL APPEARANCE IN FILM FORMATION | SURFACE RESISTANCE | ADHESIVENESS | ABRASION RESISTANCE |
| EXAMPLE1 | 2.2 | NO PROBLEM | NO PROBLEM | 9×10⁸ | ⊚ | ⊚ |
| EXAMPLE2 | 2.2 | NO PROBLEM | NO PROBLEM | 7×10⁸ | ⊚ | ⊚ |
| EXAMPLE3 | 2 | NO PROBLEM | NO PROBLEM | 2×10⁹ | ⊚ | ⊚ |
| EXAMPLE4 | 48 | NO PROBLEM | NO PROBLEM | 2×10⁹ | ⊚ | ⊚ |
| EXAMPLE5 | 58 | NO PROBLEM | NO PROBLEM | 2×10⁹ | ○ | ⊚ |
| COMPARATIVE EXAMPLE1 | - | INSOLUBLE (AGGREGATES) | FILM FORMATION NOT POSSIBLE | UNMEASURABLE | UNMEASURABLE | UNMEASURABLE |
| COMPARATIVE EXAMPLE2 | 0.5 | NO PROBLEM | CLOUDING, FOREIGN SUBSTANCES | 2×10¹¹ | UNMEASURABLE | UNMEASURABLE |
| COMPARATIVE EXAMPLE3 | 0.13 | NO PROBLEM | NO PROBLEM | 9×10¹¹ OR MORE | ⊚ | ⊚ |
| COMPARATIVE EXAMPLE4 | 0.4 | NO PROBLEM | NO PROBLEM | 9×10¹¹ OR MORE | ⊚ | ⊚ |
| COMPARATIVE EXAMPLE5 | 72 | NO PROBLEM | NO PROBLEM | 1×10⁹ | × | ○ |

From Table 1, in the cases of Examples 1 to 5, there were obtained results in which the surface resistance was sufficiently low and the adhesiveness and abrasion resistance were also good. Regardless of two kinds of conductive polymers, two kinds of resins of the primer coat layer and the presence or absence of the oxide (SANCOLLOIDAL HX-405MH), good results were obtained.
In the case of Comparative Example 1, the compatibility was insufficient and good film formation was not able to be carried out.
From the result of Comparative Example 2, it is known that clouding is generated when the conductive polymer is contained in the hard coat layer.
Furthermore, in Comparative Example 2, the adhesiveness and abrasion resistance were insufficient. This is considered due to the increase in irregularities of the surface of the coat layer when being contained in the hard coat layer is performed.
In Comparative Example 3, since the amount of the conductive polymer contained in the hard coat layer was small, no clouding was generated and the adhesiveness and abrasion resistance were also good, but the surface resistance became very high.
In Comparative Example 4, no clouding was generated and the adhesiveness and abrasion resistance were also good, but, since the amount of the conductive polymer contained in the primer coat layer was small, the surface resistance became very high.
In Comparative Example 5, since the amount of the conductive polymer contained in the primer coat layer was large, the surface resistance was low, but sufficient adhesiveness was not able to be obtained.
Furthermore, in Comparative Examples 4 and 5, the content (% by mass) of the conductive polymer is outside of 0.5% to 60%, which is the above-mentioned preferable range of the conductive polymer, and thus properties are inferior to those in Examples in which the content is within the range.

The present invention is not limited to the above-mentioned Examples, and various other configurations can be adopted within the scope not departing from the gist of the present invention.

## Claims

1. A coating composition comprising each of a component (a) and a component (b) below,
Component (a): acrylic resin or urethane resin
Component (b): a conductive polymer.

2. The coating composition according to claim 1, wherein
the conductive polymer of the component (b) is polythiophene.

3. The coating composition according to claim 1 or 2, wherein
a content (% by mass) of the component (b) in the coating composition is 0.5% to 60%.

4. The coating composition according to any one of claims 1 to 3, wherein
the coating composition further comprises a component (c) below,
Component (c) : a fine particle of oxide of at least one element selected from silicon, aluminum, tin, zirconium and titanium.

5. A plastic lens, comprising:
a base material including plastic;
a primer coat layer including the coating composition according to any one of claims 1 to 4; and
a hard coat layer formed on the primer coat layer.
